(19) Europäisches Patentamt
European Patent Office
Office européen des brevets

(11) **EP 1 746 449 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
*G02B 21/02* *(2006.01)*      *G02B 21/08* *(2006.01)*
*G02B 7/02* *(2006.01)*

(21) Anmeldenummer: **06013007.7**

(22) Anmeldetag: **23.06.2006**

(54) **Mikroskopobjektivsystem**

Microscope lens system

Système d'objectif de microscope

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.07.2005 DE 102005034442**

(43) Veröffentlichungstag der Anmeldung:
**24.01.2007 Patentblatt 2007/04**

(73) Patentinhaber: **Carl Zeiss MicroImaging GmbH 07745 Jena (DE)**

(72) Erfinder:
• **Wolleschensky, Ralf Dipl.-Phys.
07743 Jena (DE)**
• **Dobschal, Hans-Jürgen
99510 Kleinromstedt (DE)**
• **Brunner, Robert Dr.
07743 Jena (DE)**

(74) Vertreter: **Geyer, Fehners & Partner Patentanwälte Perhamerstraße 31 80687 München (DE)**

(56) Entgegenhaltungen:
DE-A1- 10 303 812      US-A- 5 153 873
US-A- 6 122 046      US-A1- 2003 044 967
US-A1- 2004 165 257      US-B1- 6 226 118

**Beschreibung**

Die Erfindung betrifft ein Mikroskopobjektivsystem mit einem Objektiv, das beispielsweise in der Fluoreszenzmikroskopie, insbesondere für die 2-Photonen Mikroskopie, eingesetzt wird.

Bei Experimenten der Fluoreszenzmikroskopie ist eine sehr hohe Lichtsammeleffizienz des Mikroskopobjektivsystems von entscheidender Bedeutung. Insbesondere bei sehr schwachen Fluoreszenzsignalen, wie sie beispielsweise bei 2-Photonen Experimenten auftreten, muß daher das Fluoreszenzlicht aus einem möglichst großen Raumwinkelbereich gesammelt werden. Bei bekannten Mikroskopobjektivsystemen mit einem Objektiv wird eine hohe Sammeleffizienz durch eine hohe numerische Apertur erreicht, die jedoch einen sehr geringen Arbeitsabstand (Abstand zwischen Objektiv und Probe) bedingt. Ein großer Arbeitsabstand ist jedoch häufig gewünscht, insbesondere wenn die Proben während des Experiments manipuliert werden müssen.

US-6,122,046 [Almogy], veröffentlicht am 19.9.2000, beschreibt ein optisches Inspektionssystem, bei dem die durch den Detektor gesammelten Lichtstrahlen einen weiteren Winkelbereich abdecken als die Beleuchtungsstrahlen.

Es ist daher Aufgabe der vorliegenden Erfindung, ein Mikroskopobjektivsystem mit einem Objektiv bereitzustellen, das eine sehr hohe Sammeleffizienz aufweist und gleichzeitig einen großen Arbeitsabstand ermöglicht.

Erfindungsgemäß wird die Aufgabe gelöst durch ein Mikroskopobjektivsystem gemäß Anspruch 1.

Da sich der Detektionsstrahlengang aus dem Beleuchtungsstrahlengang und dem Detektionsteilstrahlengang, der den Beleuchtungsstrahlengang zumindest teilweise umgibt, zusammensetzt, kann die Sammeleffizienz aufgrund des zusätzlichen Detektionsteilstrahlengangs erhöht werden. Gleichzeitig kann der Beleuchtungsstrahlengang so ausgebildet werden, daß der gewünschte Arbeitsabstand erreicht wird, obwohl die Sammeleffizienz aufgrund des Detektionsteilstrahlengangs erhöht ist. Der Detektionsteilstrahlengang dient somit ausschließlich zum Sammeln der zu detektierenden Strahlung. Der Beleuchtungsstrahlengang hingegen dient einerseits zum Beleuchten der zu untersuchenden Probe mit Beleuchtungsstrahlung und auch zum Sammeln und Weiterleiten der zu detektierenden Strahlung, die in den Beleuchtungsstrahlengang einfällt.

Der Detektionsteilstrahlengang kann am der Probe zugewandten Ende des Objektivs beginnen. Insbesondere kann der Detektionsteilstrahlengang entlang des Beleuchtungsstrahlengangs verlaufen und dabei kontinuierlich in den Beleuchtungsstrahlengang übergehen.

Der Beleuchtungsstrahlengang kann einen ersten Lichtleitwert und der Detektionsstrahlengang einen zweiten Lichtleitwert aufweisen, der größer ist als der erste Lichtleitwert. Unter dem ersten Lichtleitwert wird hier das Produkt der zu beleuchtenden Fläche der Probe mit der numerischen Apertur des Beleuchtungsstrahlenganges verstanden. In gleicher Weise wird als zweiter Lichtleitwert das Produkt der zu detektierenden Fläche der Probe mit der numerischen Apertur des Detektionsstrahlenganges verstanden. Wenn man beispielsweise davon ausgeht, daß die zu beleuchtende und die zu detektierende Fläche dieselbe Fläche ist und somit gleich groß sind, ist sofort ersichtlich, daß die numerische Apertur des Detektionsstrahlenganges größer ist als die numerische Apertur des Beleuchtungsstrahlenganges. Aufgrund der größeren numerischen Apertur des Detektionsstrahlenganges wird eine höhere Sammeleffizienz erreicht im Vergleich zu einem Objektiv, bei dem nur über den Beleuchtungsstrahlengang die zu detektierende Strahlung gesammelt wird. Um diese höhere Sammeleffizienz zu erreichen, muß jedoch der Arbeitsabstand des Objektivs zur untersuchenden Probe nicht verringert werden, da die höhere numerische Apertur nur beim Detektionsstrahlengang und nicht am Beleuchtungsstrahlengang vorliegt.

Ferner wird bei dem erfindungsgemäßen Mikroskopobjektivsystem dem Beleuchtungsstrahlengang des Objektivs eine Kernapertur und dem Detektionsteilstrahlengang eine die Kernapertur umgebende Ringapertur zugeordnet.

Es wird somit zur Detektion ein größer Raumwinkelbereich (Kernapertur + Ringapertur) genutzt als zur Beaufschlagung des Objekts mit Strahlung der Quelle (Kernapertur). Damit wird ermöglicht, daß der Beleuchtungsstrahlengang mit einer moderaten Kernapertur von beispielsweise NA = 0,8 optisch hoch korrigiert ausgebildet werden kann und gleichzeitig ein großer Arbeitsabstand vorliegt. Die äußere Ringapertur dient hingegen ausschließlich zum Sammeln der Detektionsstrahlung. Dazu ist es ausreichend, daß die Detektionsstrahlung, die aus dem Raumwinkelbereich der Ringapertur gesammelt wird, auf den Detektor geführt wird. Die Abbildungsleistung des Detektionsstrahlenganges im Bereich der Ringapertur ist dabei nicht wesentlich. Es genügt, daß die Detektionsstrahlung auf den Detektor fällt. Damit weist das Objektiv einen hoch korrigierten Beleuchtungsstrahlengang zur Beleuchtung des Objekts bei gleichzeitig großem Arbeitsabstand auf und kann aufgrund des Detektionsteilstrahlenganges aus einem größeren Raumwinkelbereich als der, der zur Beleuchtung benutzt wird, die Detektionsstrahlung sammeln, so daß die Sammeleffizienz des Objektivs erhöht ist. Das erfindungsgemäße Mikroskopobjektivsystem weist somit ein Objektiv mit einer geteilt wirkenden Apertur auf, wobei die Kernapertur bevorzugt kreisförmig und die Ringapertur bevorzugt kreisringförmig ausgebildet ist.

Insbesondere können die Abbildungseigenschaften des Beleuchtungsstrahlengangs besser sein als die Abbildungseigenschaften des Detektionsteilstrahlengangs. Dies ist deshalb möglich, da es häufig nur darauf ankommt, die zu detektierende Strahlung auf den Detektor zu lenken. Eine gute und fehlerfreie Abbildung ist dann nicht nötig. Es reicht, daß die zu detektierende Strahlung, die in den Detektionsteilstrahlengang einfällt, überhaupt auf den Detektor gelangt.

Der Detektionsteilstrahlengang ist insbesondere so ausgebildet, daß in den Detektionsteilstrahlengang einfallende, zu detektierende Strahlung über den Beleuchtungsstrahlengang auf den Detektor gelenkt wird. Es findet eine Durchmischung der zu detektierenden Strahlung, die in den Beleuchtungsstrahlengang und in den Detektionsteilstrahlengang einfällt, statt.

Insbesondere kann der Detektionsteilstrahlengang so ausgebildet sein, daß er kürzer als der Beleuchtungsstrahlengang ist und sich somit nur entlang eines Teils des Beleuchtungsstrahlengangs in Richtung der optischen Achse des Objektivs erstreckt. In diesem Fall ist der Detektionsteilstrahlengang bevorzugt am vorderen Ende (der Probe zugewandte Ende) des Objektivs angeordnet. Natürlich ist es auch möglich, daß sich der Detektionsteüstrahtengang über die gesamte Länge des Objektivs entlang des Beleuchtungsstrahlengangs erstreckt. Insbesondere kann der Detektionsteilstrahlengang so ausgebildet sein, daß er vollständig vom Beleuchtungsstrahlengang getrennt ist.

Im erfindungsgemäßen Mikroskopobjektivsystems enthält das Objektiv ein Optikelement, welches im Bereich, der dem Detektionsteilstrahlengang zugeordnet ist, eine andere optische Eigenschaft aufweist (insbesondere eine andere optische Abbildungseigenschaft) als im Bereich, der dem Beleuchtungstrahlengang zugeordnet ist. Damit kann die Teilung der Apertur mit nur einem (z.B. zusätzlichen) Optikelement verwirklicht werden. Das Optikelement ist so ausgebildet, daß seine optische Eigenschaft im Bereich, der mit der Kernapertur korreliert, möglichst neutral bezüglich der restlichen Objektivelemente ist, so daß eine Nachrüstung des Optikelements in ein schon vorhandenes Objektiv möglich ist.

Ferner können bei dem Objektiv des Mikroskopobjektivsystems der Detektionsteilstrahlengang und der Beleuchtungsstrahlengang zueinander koaxial angeordnet sein.

Bei dem Optikelement kann der Außenbereich, der mit der Ringapertur korreliert, als refraktiver Bereich mit positiver Brechkraft ausgebildet sein. Zusätzlich kann der Innenbereich, der der Kernapertur zugeordnet ist, als planparallel Platte ausgebildet sein. Ein solches Optikelement läßt sich besonders einfach beispielsweise dadurch herstellen, daß die konvexe Seite einer Plankonvex-Linse entsprechend abgeschliffen wird.

Ferner ist es möglich, den der Ringapertur zugeordneten Bereich des Optikelements als Stufenlinse, insbesondere als Fresnellinse auszubilden.

Bevorzugt ist es ferner, den der Ringapertur zugeordneten Außenbereich des Optikelements als diffraktiven Bereich auszubilden. Natürlich ist es auch möglich, daß der Außenbereich refraktive und diffraktive Eigenschaften aufweist.

Das Optikelement ist bevorzugt im Objektiv so angeordnet, daß es das letzte Element des Objektivs vor dem zu untersuchenden Objekt ist. In diesem Bereich ist die Trennung der Kern- und Ringapertur besonders leicht möglich, ohne daß sich die beiden Bereiche gegenseitig nachteilig beeinflussen.

Das Mikroskopobjektivsystem weist bevorzugt ferner einen Detektor und einen zwischen dem Detektor und dem Objektiv angeordneten Strahlteiler zur Trennung von Beleuchtungs- und Detektionsstrahlung auf, wobei der Strahlteiler die Detektionsstrahlung auf den Detektor lenkt. Als Strahlteiler kann beispielsweise ein wellenlängenselektiver Strahlteiler verwendet werden. Dies ist insbesondere bei der Verwendung des Mikroskopobjektivsystems für die Fluoreszenzmikroskopie vorteilhaft.

Der Detektor ist beispielsweise ein Flächendetektor. Ein solcher Detektor wird insbesondere dann eingesetzt, wenn das Mikroskopobjektivsystem in einem Laserscanningmikroskop verwendet wird.

Das Objektiv des Mikroskopobjektivsystems kann ein optisches Frontelement (also das Element, dessen Abstand zur Probe bei Verwendung des Mikroskopobjektivsystems in einem Mikroskop am geringsten ist), das z. B. in Richtung der optischen Achse des Objektivs nicht verschiebbar angeordnet ist, mehrere von dem Frontelement und voneinander beabstandete Optikelemente, die entlang der optischen Achse verschiebbar sind, sowie eine Stelleinrichtung aufweisen, mittels der die Optikelemente entlang der optischen Achse derart verschiebbar sind, daß zumindest ein Abstand zwischen zwei benachbarten Elementen veränderbar ist. Dies kann insbesondere so durchgeführt werden, daß nur der eine Abstand zwischen zwei benachbarten Elementen verändert wird.

Eine solche Änderung des Abstands kann beispielsweise dazu benutzt werden, daß ein temperaturbedingter Abbildungsfehler des Objektivs kompensiert wird, wenn die Abstandsänderung in Abhängigkeit der Temperatur durchgeführt wird. Es kann somit ein Objektiv bereitgestellt werden, das für einen Temperaturbereich von 20, 30 oder mehr °C korrigiert ist.

Bevorzugt wird diese Temperaturkompensation gesteuert bzw. geregelt durchgeführt und in diesem Fall wird noch ein Temperatursensor vorgesehen, der laufend die aktuelle Objektivtemperatur ermittelt und diese an die Stelleinrichtung weitergibt, die in Abhängigkeit der ermittelten Temperatur den Abstand bzw. die Abstände einstellt.

Insbesondere kann die Änderung des Abstands zwischen zwei benachbarten Elementen, wenn das Mikroskopobjektivsystem bei einem Immersionsmikroskop eingesetzt wird, dazu benutzt werden, um beispielsweise Dickenschwankungen des Immersionsmediums, thermisch bedingte Änderungen des Brechungsindexes des Immersionsmediums und/oder eine Änderung der Art des Immersionsmediums zu kompensieren. Durch die Änderung des Abstandes wird der dadurch bedingte Öffnungsfehler kompensiert.

Insbesondere kann die Änderung von zwei verschiedenen Abständen zwischen benachbarten Elementen, wobei die Abstände bevorzugt unabhängig voneinander geändert werden, dazu genutzt werden, die Lage des Fokuses zu ändern, ohne den Arbeitsabstand zwischen dem Objektiv und der zu untersuchenden Probe ändern zu müssen. Man hat praktisch eine Art Innenfokusierung, bei der weder das Objektiv als ganzes, noch der Probentisch in Richtung der optischen Achse des Objektivs bewegt werden muß. Dies führt insbesondere bei der Verwendung des Mikroskopobjektivssystems in einem Mikroskop (beispielsweise einem Laserscanningmikroskop) dazu, daß optische Schnitte in verschiedenen Tiefen der Probe durchgeführt werden können, ohne die Probe entlang der optischen Achse oder das gesamte Objektiv bewegen zu müssen. Damit wird vorteilhaft erreicht, daß bei der Änderung der Fokuslage der Arbeitsabstand (unter Arbeitsabstand wird hier der Abstand zwischen Frontelement und Probenoberfläche verstanden) konstant bleiben kann, so daß über das Immersionsmedium aufgrund der Änderung der Fokuslage keine Kraft auf die Probe übertragen wird und Schwingungen, die beispielsweise bei herkömmlicher Fokussierung auftreten können, vermieden werden. Ferner muß nicht mehr das gesamte Objektiv bewegt werden, so daß eine geringere zu bewegende Masse vorliegt.

Auch die Änderung eines Abstands zwischen benachbarten Elementen zur Kompensation eines temperaturbedingten Abbildungsfehlers kann so durchgeführt werden, daß der Arbeitsabstand konstant bleibt.

Insbesondere werden mittels der Stelleinrichtung genau zwei Abstände zwischen Elementen des Objektivs verändert.

Besonders bevorzugt ist die Verwendung des erfindungsgemäßen Mikroskopobjektivsystems (bzw. einer seiner bevorzugten Ausgestaltungen) bei einem Mikroskop, insbesondere bei einem Fluoreszenzmikroskop oder einem 2-Photonen-Mikroskop. Es wird dann ein Mikroskop zur Verfügung gestellt, das aufgrund des Mikroskopobjektivsystems eine extrem hohe Lichtsammeleffizienz bei gleichzeitig sehr großem Arbeitsabstand zwischen dem Objektiv und dem zu untersuchenden Objekt aufweist. Das Mikroskop kann insbesondere als Immersionsmikroskop ausgebildet sein. Das Mikroskopobjektivsystem ist für jedes Mikroskop geeignet, besonders bevorzugt ist beispielsweise ein Laserscanningmikroskop.

Ferner wird ein Mikroskopierverfahren nach Anspruch 12 bereitgestellt, bei dem eine zu untersuchende Probe mit Strahlung einer Quelle über ein Objektiv beaufschlagt und von der Probe kommende, zu detektierende Strahlung über das Objektiv zu einem Detektor geführt wird, wobei zum Beaufschlagen ein kleinerer Lichtleitwert genutzt wird als zum Detektieren.

Insbesondere wird vom Objektiv zum Beaufschlagen ein kleinerer Raumwinkelbereich genutzt als zur Detektion. Bei dem Mikroskopierverfahren kann die Probe mit gepulster Beleuchtungsstrahlung beaufschlagt werden. Ferner kann die 2-Photonen Anregung detektiert werden.

Bei dem Mikroskopierverfahren wird das oben beschriebene Mikroskopobjektivsystem oder seine Weiterbildungen verwendet.

Die Erfindung wird nachfolgend beispielshalber anhand der Figuren noch näher erläutert. Es zeigen:

Fig. 1    eine schematische Ansicht einer Ausführungsform des erfindungsgemäßen Mikroskops;

Fig. 2    eine Draufsicht auf ein Optikelement des Objektivs des Mikroskops von Fig. 1;

Fig. 3    ein Linsenschnitt des Mikroskopobjektivsystems von Fig. 1 mit eingezeichnetem Strahlenverlauf der Kernapertur des Objektivs, und

Fig. 4    ein Linsenschnitt des Mikroskopobjektivsystems von Fig. 1 mit eingezeichnetem Strahlenverlauf für die Ringapertur des Objektivs.

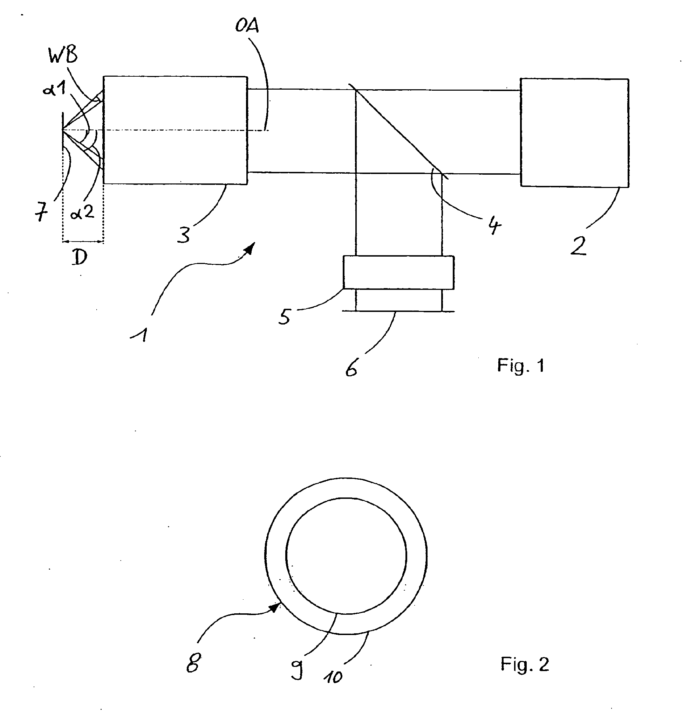

Das in Fig. 1 schematisch dargestellte Mikroskop umfaßt ein Mikroskopobjektivsystem 1 und eine Beleuchtungsquelle 2, die hier elektromagnetische Strahlung mit einer Wellenlänge von 700 - 1100 nm abgeben kann.

Das Mikroskopobjektivsystem 1 umfaßt ein Objektiv 3, einen Farbteiler 4, eine Detektoroptik 5 sowie einen Flächendetektor 6, der einen kreisförmigen Detektionsbereich mit einem Durchmesser ca. 10 mm aufweist. Der Farbteiler 4 ist so ausgelegt, daß er die elektromagnetische Strahlung der Quelle 2 transmittiert und zu detektierende Strahlung, die von dem Objekt bzw. der Probe 7 kommt und in einem Wellenlängenbereich von 400 - 700 nm liegt, reflektiert.

Das Objektiv 3 ist so ausgelegt, daß zur Beleuchtung eines Objekts 7 ein kleinerer Raumwinkelbereich ($\alpha$1) genutzt wird als zur Detektion ($\alpha$2). Die numerische Apertur des Objektivs 3 wird somit in eine Kernapertur (die dem Winkel $\alpha$1 entspricht) und eine Ringapertur aufgeteilt, die dem Winkelbereich WB (WB enthält Winkel, die größer als $\alpha$1 und kleiner oder gleich $\alpha$2 sind) entspricht. Bei dem hier beschriebenen Mikroskopobjektivsystem ist das Objektiv ein Immersionsobjektiv, wobei als Immersionsflüssigkeit Wasser verwendet wird. Der Arbeitsabstand D zwischen dem Objektiv 3 und der Probe 7 beträgt hier 2,11 mm, die Kernapertur beträgt 0,8 und die äußere Ringapertur liegt im Bereich von 0,8 bis 1,15.

Das Objektiv 3 ist so ausgebildet, daß es nur für den der Kernapertur zugeordneten Beleuchtungsstrahlengang (im Objektiv 3) optisch für die elektromagnetische Strahlung der Quelle 2 hoch korrigiert ist. Die Korrektur ist dabei hier so gewählt, daß man von einer beugungsbegrenzten Abbildung sprechen kann.

In dem der Ringapertur zugeordneten Detektionsteilstrahlengang des Objektivs 3 ist das Objektiv 3 wesentlich schlechter bzw. nicht optisch für die elektromagnetische Strahlung der Quelle 2 korrigiert. Nachdem dieser Bereich jedoch nicht zur Beleuchtung verwendet wird, führt dies zu keinerlei Nachteilen bei der Beleuchtung bzw. Anregung der zu untersuchenden Probe 7.

Der Detektionsteilstrahlengang ist im wesentlichen so ausgelegt, daß Fluoreszenzstrahlung von der Probe, die aus dem entsprechend zugeordneten Raumwinkelbereich WB stammt, sicher auf den Detektor 6 gelangt. Es ist dazu keine qualitativ gute Abbildung nötig, da der Ort, an dem die detektierte Strahlung auf den Detektionsbereich des Flächendetektors 6 trifft, nicht ausgewertet wird. Wesentlich ist nur, daß die detektierte Strahlung, die in den Detektionsteilstrahlengang gelangt, überhaupt auf den Detektionsbereich des Flächendetektors trifft. Aber auch die zu detektierende Strahlung, die in den Beleuchtungsstrahlengang gelangt, wird zum Detektor geführt. Somit bilden Detektionsteilstrahlengang und Beleuchtungsstrahlengang einen Detektionsstrahlengang, dem sowohl die Kernapertur als auch die Ringapertur zugeordnet ist.

Um dies zu realisieren, enthält das Objektiv 3 ein Optikelement 8 (Fig. 2), das einen kreisförmigen Innenbereich 9 und einen diesen umschließenden kreisringförmigen Außenbereich 10 umfaßt. Der Innenbereich 9 korreliert mit der Kernapertur und der Außenbereich 10 korreliert mit der äußeren Ringapertur. In dem hier beschriebenen Beispiel ist der Innenbereich 9 als planparallel Platte mit einer Dicke von 2,14 mm ausgebildet und ist der Außenbereich 10 als plankonvexe Linse ausgebildet. Mit diesem Optikelement 10 wird die Teilung der Apertur des Objektivs 3 in die Kernapertur und die Ringapertur durchgeführt.

Anders gesagt, ist der Lichtleitwert des Beleuchtungsstrahlenganges (also Kernapertur mal beleuchtete Fläche der Probe im Fokus) kleiner als der Lichtleitwert des Detektionsstrahlengangs (also (Kernapertur + Ringapertur) mal zu detektierende Fläche, die der beleuchteten Fläche der Probe im Fokus entspricht).

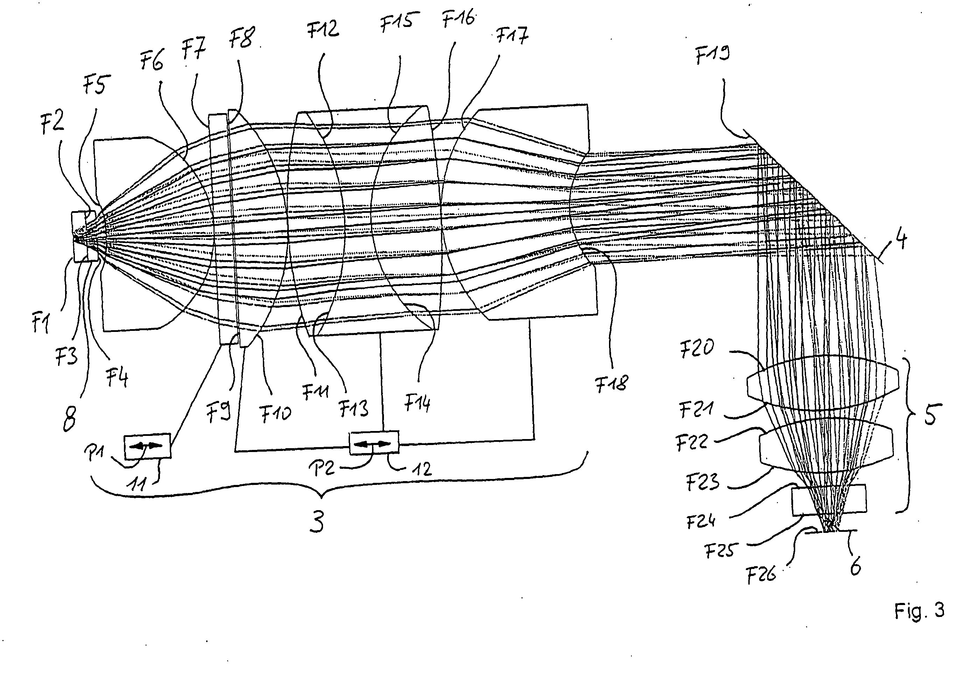

In der Linsenschnittdarstellung von Fig. 3 ist der Strahlengang für Detektionsstrahlung dargestellt, die innerhalb der Kernapertur gesammelt und auf den Detektor 6 gelenkt wird. Dieser Strahlengang entspricht vom Farbteiler 4 bis hin zur Probe 7 auch dem Beleuchtungsstrahlengang für das Licht der Quelle 2.

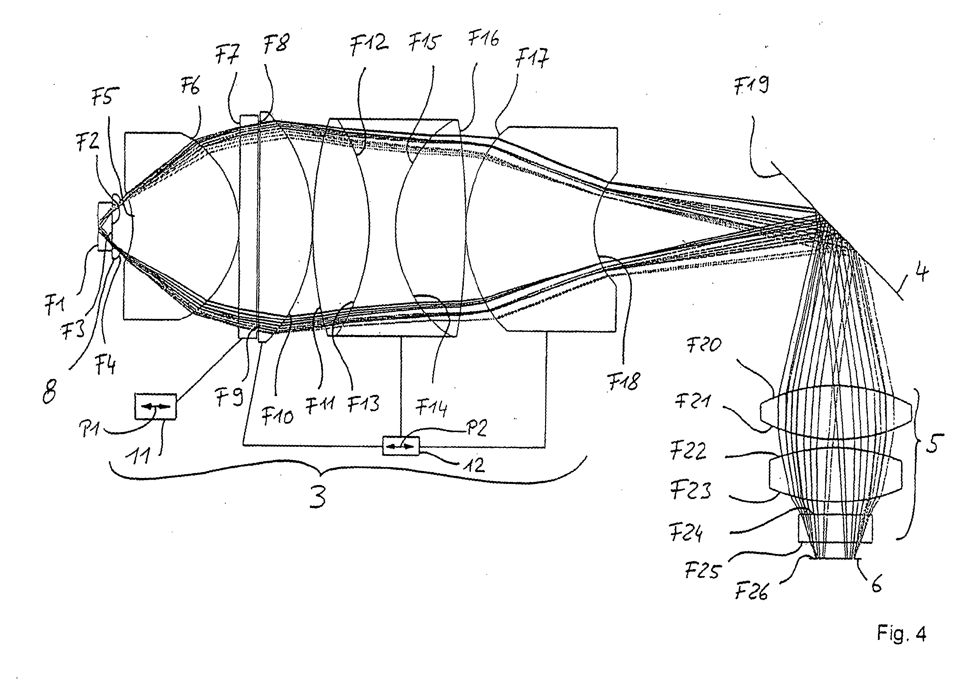

In Figur 4 ist der Strahlengang für Detektionsstrahlung eingezeichnet, die über den Ringaperturbereich gesammelt wird. Diese Strahlung ist somit die zusätzlich gesammelte Strahlung, die zu einer erhöhten Sammeleffizienz führt. Wie Fig. 4 im Vergleich mit Fig. 3 zu entnehmen ist, verläuft die über die Ringapertur gesammelte Strahlung mit zunehmendem Abstand von der Fläche F4 in Fig. 4 nach rechts immer mehr im Beleuchtungstrahlengang. Der Detektionsteilstrahlengang geht somit in den Beleuchtungsstrahlengang über und es findet eine Durchmischung der über die Kernapertur und Ringapertur gesammelten Detektionsstrahlung statt. Daher ist das erfindungsgemäße Mikroskopobjektivsystem insbesondere zur 2-Photonen oder auch Mehr-Photonen-Mikroskopie geeignet. In Fig. 3 ist vom Optikelement 8 nur der Innenbereich 9 und in Fig. 4 ist nur der Außenbereich eingezeichnet.

Der genaue optische Aufbau des Objektivs 3 ist in den nachfolgenden Tabellen angegeben:

**Tabelle 1:**

| Fläche - Fläche | Abstand [mm] | Material |
|---|---|---|
| F1-F2 | 2,11 | Wasser |
| F2 - F3 | 0 | Wasser |
| F3 - F4 | 2,14 | N-SK2 |
| F4 - F5 | 0,90 | Gas (z.B. Luft) |
| F5 - F6 | 15,99 | N-LASF31 |
| F6 - F7 | 0,05 | Gas (z.B. Luft) |
| F7 — F8 | 2,70 | Suprasil |
| F8 — F9 | 0,24 | Gas (z.B. Luft) |
| F9 — F10 | 8,08 | N-PSK3 |
| F10 — F11 | 0,05 | Gas (z.B. Luft) |
| F11 — F12 | 8,58 | N-FK5 |
| F12 — F13 | 0 | Kitt |
| F13 — F14 | 4,00 | SF5 |
| F14 — F15 | 0 | Kitt |
| F15 — F16 | 10,75 | N-BaLF5 |

(fortgesetzt)

| Fläche - Fläche | Abstand [mm] | Material |
|---|---|---|
| F16 — F17 | 0,05 | Gas (z.B. Luft) |
| F17 — F18 | 19,93 | N-LAK8 |
| F18 — F19 | 37,42 | Gas (z.B. Luft) |
| F19 — F20 | 23,00 | Gas (z.B. Luft) |
| F20 — F21 | 8,00 | N-BK7 |
| F21 - F22 | 1,20 | Gas (z.B. Luft) |
| F22 - F23 | 8,00 | N-BK7 |
| F23 - F24 | 2,00 | Gas (z.B. Luft) |
| F24 - F25 | 4,00 | Filter |
| F25 - F26 | 2,50 | Gas (z.B. Luft) |

**Tabelle 2:**

| Fläche | Krümmungsradius [mm] | Flächentyp |
|---|---|---|
| F1 | unendlich | Planfläche |
| F2 | unendlich | Planfläche |
| F3 | unendlich | Planfläche |
| F4 | 8,7856 | konvexe Fläche |
| F5 | 13,146 | konkave Fläche |
| F6 | 15,181 | konvexe Fläche |
| F7 | unendlich | Planfläche |
| F8 | unendlich | Planfläche |
| F9 | unendlich | Planfläche |
| F10 | 24,938 | konvexe Fläche |
| F11 | 57,051 | konvexe Fläche |
| F12 | 28,800 | konvexe Fläche |
| F13 | 28,800 | konkave Fläche |
| F14 | 19,387 | konkave Fläche |
| F15 | 19,387 | konvexe Fläche |
| F16 | 105,934 | konvexe Fläche |
| F17 | 20,834 | konvexe Fläche |
| F18 | 11,884 | konkave Fläche |
| F19 | unendlich | Planfläche |
| F20 | 25,851 | konvexe Fläche |
| F21 | 25,851 | konvexe Fläche |
| F22 | 25,851 | konvexe Fläche |
| F23 | 25,851 | konvexe Fläche |
| F24 | unendlich | Planfläche |
| F25 | unendlich | Planfläche |

(fortgesetzt)

| Fläche | Krümmungsradius [mm] | Flächentyp |
|--------|----------------------|------------|
| F26 | unendlich | Planfläche |

Das Optikelement 8 ist natürlich nur im Bereich der äußeren Ringapertur als Plankonvexlinse ausgebildet. Der Krümmungsradius der Fläche F4 ist somit nur für den Außenbereich 10 angegeben. Im Bereich der Kernapertur (Innenbereich 9) mit einem Durchmesser von 6,6 mm ist das Optikelement 8 als planparallele Platte ausgebildet, so daß im Kernbereich 9 die Fläche F4 einen unendlich großen Krümmungsradius aufweist.

Die Flächen F12 + F13 sowie F14 + F15 sind jeweils miteinander verkittet. Bei dem Element mit den Flächen F 24 und F25 handelt es sich um einen Emissionsfilter.

Die Fläche F7 ist als diffraktive Fläche ausgebildet, die durch das folgende Phasenpolynom P(r) beschrieben werden kann

$$P(r) := \sum_{i=1}^{5} a_i \cdot r^{2 \cdot i}$$

wobei $a_1 = 2{,}7630329 \times 10^{-4}$, $a_2 = -3{,}440241 \times 10^{-7}$, $a_3 = 1{,}1453504 \times 10^{-9}$, $a_4 = -1{,}937287 \times 10^{-12}$, $a_5 = -3{,}479758 \times 10^{-17}$ und r der radiale Abstand ist. Das Phasenpolynom P(r) gibt die Phasenverschiebung in Abhängigkeit vom radialen Abstand r an und aus der Ableitung des Phasenpolynoms nach dem radialen Abstands r läßt sich die Gitterfrequenz des diffraktiven Elements berechnen.

In Fig. 3 und 4 sind noch schematisch zwei Stellelemente 11 und 12 gezeigt, die zusammen eine Stelleinrichtung bilden. Mittels dem Stellelement 11 kann, wie durch den Doppelpfeil P1 angedeutet ist, das Element mit den Flächen F7 und F8 entlang der optischen Achse des Objektivs 3 bewegt werden. In gleicher Weise kann mittels dem Stellelement 12, wie durch den Doppelpfeil P2 angedeutet ist, die Gruppe der Optikelemente mit den Flächen F9 - F18 zusammen in Richtung der optischen Achse des Objektivs 3 bewegt werden. Damit ist es möglich, mittels der Stellelemente 11 und 12 den Abstand zwischen den Flächen F6 und F7 und den Abstand zwischen den Flächen F8 und F9 unabhängig voneinander einzustellen. Dies kann dazu genutzt werden, um die Fokuslage entlang der optischen Achse zu verändern, ohne den Arbeitsabstand D zu verändern, so daß optische Schnitte in verschiedenen Tiefen der Probe durchgeführt werden können. Da der Arbeitsabstand D dazu nicht geändert werden muß, führt dies nicht zu ansonsten nachteilig auftretenden Schwingungen und Kraftübertragungen auf die Probe über die Immersionsflüssigkeit, die bei herkömmlicher Fokussierung aufgrund der Bewegung eines Probentisches und/oder des Objektivs und somit aufgrund der Änderung des Arbeitsabstands auftreten würde.

Das Objektiv 3 ist in diesem Fall bevorzugt etwas anders aufgebaut als das bisher beschriebene Objektiv 3. Der Aufbau der Detektoroptik 5 bleibt unverändert. Der geänderte Objektivaufbau kann den nachfolgenden Tabellen 3 und 4 entnommen werden:

**Tabelle 3:**

| Fläche - Fläche | Abstand [mm] | Material |
|-----------------|--------------|----------|
| F1- F2 | 2,0 | Wasser |
| F2 - F3 | 0,00 | |
| F3 - F4 | 0,80 | Suprasil |
| F4 - F5 | 0,98 | Gas (z.B. Luft) |
| F5 - F6 | 17,37 | N-LASF31 |
| F6 - F7 | 0,36 | Gas (z.B. Luft) |
| F7 - F8 | 2,50 | Suprasil |
| F8 - F9 | 0,99 | Gas (z.B. Luft) |
| F9 - F10 | 6,86 | PSK3 |
| F10 - F11 | 0,05 | Gas (z.B. Luft) |
| F11 - F12 | 9,47 | FK5 |

(fortgesetzt)

| Fläche - Fläche | Abstand [mm] | Material |
|---|---|---|
| F12 - F13 | 0,00 | Kitt |
| F13 - F14 | 4,00 | SF5 |
| F14 - F15 | 0,00 | Kitt |
| F15 - F16 | 8,36 | N-BaLF5 |
| F16 - F17 | 0,05 | Gas (z.B. Luft) |
| F17 - F18 | 17,46 | N-LAK8 |

**Tabelle 4:**

| Fläche | Radius [mm] | Flächentyp |
|---|---|---|
| F1 | unendlich | Planfläche |
| F2 | unendlich | Planfläche |
| F3 | unendlich | Planfläche |
| F4 | 8,79 | konvexe Fläche |
| F5 | - 14,236 | konkave Fläche |
| F6 | - 14,495 | konvexe Fläche |
| F7 | unendlich | Planfläche |
| F8 | unendlich | Planfläche |
| F9 | unendlich | Planfläche |
| F10 | - 26,120 | konvexe Fläche |
| F11 | 42,398 | konvexe Fläche |
| F12 | - 24,357 | konvexe Fläche |
| F13 | - 24,357 | konkave Fläche |
| F14 | 18,042 | konkave Fläche |
| F15 | 18,042 | konvexe Fläche |
| F16 | -312,963 | konvexe Fläche |
| F17 | 19,022 | konvexe Fläche |
| F18 | 11,170 | konkave Fläche |

Die Koeffizienten der diffraktiven Fläche F7 für obiges Phasenpolynom P(r) lauten wie folgt: $a1 = 2,6647 \times 10^{-4}$, $a2 = 3,985 \times 10^{-7}$, $a3 = 1,3929 \times 10^{-9}$, $a4 = -3,1751 \times 10^{-13}$, $a5 = -3,7438 \times 10^{-17}$.
Die notwendige Änderung der Abstände zwischen den Flächen F6 und F7 sowie zwischen den Flächen F8 und F9 für einen Defokussierungsbereich von +/- 0,1 mm ist in der nachfolgenden Tabelle 5 angegeben.

**Tabelle 5:**

| Defokussierung [mm] | Änderung Abstand F6-F7 [mm] | Änderung Abstand F8-F9 [mm] |
|---|---|---|
| - 0,1 | - 0,16 | 0,85 |
| - 0,08 | - 0,12 | 0,68 |
| - 0,06 | - 0,09 | 0,51 |
| - 0,04 | - 0,06 | 0,34 |

(fortgesetzt)

| Defokussierung [mm] | Änderung Abstand F6-F7 [mm] | Änderung Abstand F8-F9 [mm] |
|---|---|---|
| - 0,02 | - 0,03 | 0,17 |
| 0,0 | 0,0 | 0,0 |
| 0,02 | 0,03 | - 0,17 |
| 0,04 | 0,06 | - 0,34 |
| 0,06 | 0,09 | - 0,51 |
| 0,08 | 0,12 | - 0,68 |
| 0,10 | 0,15 | - 0,85 |

Ferner ist es möglich, durch Änderung der Abstände F6 - F7 sowie F8 - F9 eine Temperaturkompensation von Bildfehlern in einem Temperaturbereich von beispielsweise von 20 bis 40°C zu erreichen. Wenn das Objektiv 3 für eine Temperatur von 20°C ausgelegt ist, muß bei einer Betriebstemperatur von 30°C der Abstand F6 - F7 um -0,0324 mm und der Abstand F8 - F9 um 0,0109 mm geändert werden. Bei einer Temperatur von 40°C beträgt die Änderung des Abstandes F6 - F7 -0,0658 mm und die Änderung des Abstandes F8 - F9 0,0231 mm.

Als Stellelemente 11 und 12 können beispielsweise Piezostellelemente oder sonstige Stellelemente verwendet werden, die die gewünschte Genauigkeit zur Verschiebung der Elemente aufweisen.

Insbesondere kann noch ein Temperatursensor (nicht gezeigt) vorgesehen werden, der laufend die Temperatur des Objektivs 3 mißt und diese an eine (nicht gezeigte) Steuereinrichtung weitergibt. Die Steuereinrichtung steuert dann in Abhängigkeit der gemessenen Temperatur die Stellelemente 11 und 12 an. Eine solche Steuereinrichtung kann natürlich auch dazu verwendet werden, um die Fokuslage in der oben beschriebenen Art zu ändern.

Bei dem in Fig. 1 gezeigten Mikroskop kann beispielsweise noch eine Ablenkeinheit zwischen dem Objektiv 3 und dem Farbteiler 4 angeordnet sein, so daß das Mikroskop dann als Laserscanningmikroskop ausgebildet ist. Die Detektoroptik 5 kann auch weggelassen werden.

## Patentansprüche

1. Mikroskopobjektivsystem für ein Laserscanningmikroskop, mit einem Objektiv (3), das einen Beleuchtungsstrahlengang, über den Beleuchtungsstrahlung einer Quelle (2) auf ein zu untersuchendes Objekt (7) gerichtet wird, sowie einen den Beleuchtungsstrahlengang zumindest teilweise umgebenden Detektionsteilstrahlengang umfaßt, der zusammen mit dem Beleuchtungsstrahlengang einen Detektionsstrahlengang bildet, über den von der Probe (7) kommende, zu detektierende Strahlung zu einem Detektor (6) geführt wird, wobei dem Beleuchtungsstrahlen-eingang eine Kernapertur ($\alpha$1), dem Detektionsteilstrahlengang eine die Kernapertur umgebende Ringapertur und somit dem Detektionsstrahlengang ($\alpha$2) sowohl die Kernapertur als auch die Ringapertur zugeordnet sind, **dadurch gekennzeichnet, daß** das Objektiv (3) ein Optikelement (8) enthält, welches in einem Außenbereich (10), der der Ringapertur zugeordnet ist, eine andere optische Abbildungseigenschaft aufweist als in einem Innenbereich (9), der der Kernapertur zugeordnet ist, und daß das Optikelement (8) als Ringlinse ausgebildet ist, bei der der Innenbereich (9) als planparallele Platte ausgebildet ist.

2. Mikroskopobjektivsystem nach Anspruch 1, **dadurch gekennzeichnet, daß** der Detektionsteilstrahlengang am der Probe zugewandten Ende des Objektivs beginnt und/oder bei dem die Abbildungseigenschaften des Beleuchtungsstrahlenganges besser sind als die Abbildungseigenschaften des Detektionsteilstrahlenganges.

3. Mikroskopobjektivsystem nach Anspruch 1 oder 2, **dadurch gekennzeichnet, daß** der Beleuchtungsstrahlengang einen ersten Lichtleitwert und der Detektionsstrahlengang einen zweiten Lichtleitwert aufweist, der größer als der erste Lichtleitwert ist.

4. Mikroskopobjektivsystem nach einem der obigem Ansprüche, **dadurch gekennzeichnet, daß** der Innenbereich kreisförmig sowie der Außenbereich kreisringförmig ausgebildet ist und/oder bei dem der Außenbereich (10) als refraktiver Bereich mit positiver Brechkraft ausgebildet ist.

5. Mikroskopobjektivsystem nach einem der obigem Ansprüche, **dadurch gekennzeichnet, daß** der Außenbereich (10) als Stufenlinse, insbesondere als Fresnellinse ausgebildet ist, oder bei dem der Außenbereich als diffraktiver Bereich ausgebildet ist.

6. Mikroskopobjektivsystem nach einem der Ansprüche 1 bis 4, **dadurch gekennzeichnet, daß** das Optikelement (8) so im Objektiv (3) angeordnet ist, daß es das letzte Element des Objektivs (3) vor der zu untersuchenden Probe (7) ist.

7. Mikroskopobjektivsystem nach einem der obigen Ansprüche, **dadurch gekennzeichnet, daß** der Detektionsteilstrahlengang und der Beleuchtungsstrahlengang zueinander koaxial angeordnet sind und/oder bei dem der Detektionsteilstrahlengang entlang des Beleuchtungsstrahlenganges verläuft und dabei kontinuierlich in den Beleuchtungsstrahlengang übergeht.

8. Mikroskopobjektivsystem nach einem der obigen Ansprüche, **dadurch gekennzeichnet, daß** ferner ein Detektor (6) und ein zwischen dem Detektor (6) und dem Objektiv (3) angeordneter Strahlteiler (4) vorgesehen sind, wobei der Strahlteiler (4) die zu detektierende Strahlung auf den Detektor (6) lenkt.

9. Mikroskopobjektivsystem nach einem der obigen Ansprüche, **dadurch gekennzeichnet, daß** das Objektiv (3) ein optisches Frontelement (8), mehrere von dem Frontelement und voneinander beabstandete Optikelemente sowie eine Stelleinrichtung (11, 12) aufweist, mittels der zumindest eines der Optikelemente entlang der optischen Achse (OA) derart verschiebbar ist, daß zumindest ein Abstand zwischen zwei benachbarten Elementen veränderbar ist, wobei insbesondere mittels der Stelleinrichtung (11, 12) der zumindest eine Abstand verändert wird, um die Fokuslage des Objektivs (3) relativ zum Frontelement in Richtung der optischen Achse (OA) zu verschieben.

10. Mikroskopobjektivsystem nach Anspruch 9, **dadurch gekennzeichnet, daß** mittels der Stelleinrichtung der zumindest eine Abstand in Abhängigkeit der Temperatur des Objektivs verändert wird, um einen temperaturbedingten Abbildungsfehler des Objektivs zu kompensieren und/oder bei dem mittels der Stelleinrichtung zwei Abstände voneinander unabhängig verändert werden.

11. Verwendung eines Mikroskopobjektivsystems nach einem der obigen Ansprüche bei einem Mikroskop, insbesondere bei einem Fluoreszenzmikroskop oder einem 2-Photonen-Mikroskop.

12. Mikroskopierverfahren, bei dem eine zu untersuchende Probe mit Beleuchtungsstrahlung einer Quelle über ein Objektiv beaufschlagt und von der Probe kommende, zu detektierende Strahlung über das Objektiv zu einem Detektor geführt wird, wobei zum Beaufschlagen ein kleinerer Lichtleitwert genutzt wird als zum Detektieren, dem Lichtleitwert beim Beaufschlagen eine Kernapertur und dem Lichtleitwert beim Detektieren die Kernapertur und eine die Kernapertur umgebende Ringapertur zugeordnet ist, **dadurch gekennzeichnet, daß** ein Mikroskopobjektivsystem nach Anspruch 1 verwendet wird.

13. Verfahren nach Anspruch 12, bei dem die Probe mit gepulster Beleuchtungsstrahlung beaufschlagt wird und/oder bei dem eine 2-Photonen Anregung detektiert wird.

**Claims**

1. A microscope objective system for a laser scanning microscope, comprising an objective (3), which comprises an illumination beam path via which illumination radiation from a source (2) is directed onto an object (7) to be examined, as well as a partial detection beam path surrounding at least part of the illumination beam path and, together with the illumination beam path, forms a detection beam path via which radiation to be detected and coming from the sample (7) is guided towards a detector (6), wherein a core aperture ($\alpha1$) is assigned to the illumination beam path, a ring aperture surrounding the core aperture is assigned to the partial detection beam path and thus the core aperture as well as the ring aperture are assigned to the detection beam path ($\alpha2$), **characterized in that** the objective (3) includes an optical element (8) which has a different optical imaging property in an outer region (10) assigned to the ring aperture than in an inner region (9) assigned to the core aperture and **in that** the optical element (8) is provided as a ring lens, wherein the inner region (9) is provided as a plane-parallel plate.

2. The microscope objective system as claimed in Claim 1, **characterized in that** the partial detection beam path begins at the end of the objective facing towards the sample and/or wherein the imaging properties of the illumination beam path are better than the imaging properties of the partial detection beam path.

3. The microscope objective system as claimed in Claim 1 or 2, **characterized in that** the illumination beam path has a first etendue and the detection beam path has a second etendue which is greater than the first etendue.

4. The microscope objective system as claimed in any one of the above Claims, **characterized in that** the inner region has a circular shape and the outer region has an annular ring shape and/or wherein the outer region (10) is provided as a refractive region having positive refractive power.

5. The microscope objective system as claimed in any one of the above Claims, **characterized in that** the outer region (10) is provided as a stepped lens, in particular as a Fresnel lens, or wherein the outer region is provided as a diffractive region.

6. The microscope objective system as claimed in any one of Claims 1 to 4, **characterized in that** the optical element (8) is arranged within the objective (3) such that it is the last element of the objective (3) preceding the sample (7) to be examined.

7. The microscope objective system as claimed in any one of the above Claims, **characterized in that** the partial detection beam path and the illumination beam path are arranged coaxially with respect to each other and/or wherein the partial detection beam path extends along the illumination beam path and thus continuously passes into the illumination beam path.

8. The microscope objective system as claimed in any one of the above Claims, **characterized in that** a detector (6) and a beam splitter (4) arranged between the detector (6) and the objective (3) are further provided, said beam splitter (4) directing the radiation to be detected onto the detector (6).

9. The microscope objective system as claimed in any one of the above Claims, **characterized in that** the objective (3) comprises an optical front element (8), a plurality of optical elements spaced apart from the front element and from each other, as well as an actuator unit (11, 12) by means of which at least one of the optical elements is displaceable along the optical axis (OA) such that at least one distance between two adjacent elements is modifiable, wherein, in particular, the at least one distance is modified by the actuator unit (11, 12) in order to displace the focal position of the objective (3) relative to the front element in the direction of the optical axis (OA).

10. The microscope objective system as claimed in Claim 9, **characterized in that** the at least one distance is modified by the actuator unit as a function of the temperature of the objective in order to compensate for a temperature-induced imaging error of the objective and/or wherein two distances are independently modified by the actuator unit.

11. The use of a microscope objective system as claimed in any one of the above Claims in a microscope, in particular in a fluorescence microscope or a 2-photon microscope.

12. A microscoping method, wherein illumination radiation from a source is irradiated via an objective onto a sample to be examined, and radiation to be detected and coming from the sample is guided to a detector via the objective, with a smaller etendue being used for irradiation than for detection, a core aperture is assigned to the etendue for irradiation and a ring aperture surrounding the core aperture is assigned to the etendue for detection, **characterized in that** a microscope objective system according to claim 1 is used.

13. The method as claimed in Claim 12, wherein the sample is irradiated with pulsed illumination radiation and/or wherein a 2-photon excitation is detected.

**Revendications**

1. Système d'objectif de microscope pour un microscope à balayage laser, avec un objectif (3) qui comprend un trajet de faisceau d'éclairage sur lequel un rayonnement d'éclairage d'une source (2) est dirigé sur un objet (7) à examiner, ainsi qu'un trajet de faisceau partiel de détection qui entoure le trajet de faisceau d'éclairage au moins en partie et qui forme avec le trajet de faisceau d'éclairage un trajet de faisceau de détection sur lequel un rayonnement à détecter, provenant de l'échantillon (7), est amené jusqu'à un détecteur (6),

dans lequel une ouverture centrale ($\alpha$1) est attribuée au trajet de faisceau d'éclairage, une ouverture annulaire entourant l'ouverture centrale est attribuée au trajet de faisceau partiel de détection, et ainsi aussi bien l'ouverture centrale que l'ouverture annulaire sont attribuées au trajet de faisceau de détection ($\alpha$2),

**caractérisé en ce que** l'objectif (3) comprend un élément optique (8) qui présente dans une zone extérieure (10), qui est attribuée à l'ouverture annulaire, une propriété de reproduction optique autre que dans une zone intérieure (9) qui est attribuée à l'ouverture centrale, et
**en ce que** l'élément optique (8) est réalisé comme une lentille annulaire sur laquelle la zone intérieure (9) est réalisée comme un disque à faces planes et parallèles.

2. Système d'objectif de microscope selon la revendication 1, **caractérisé en ce que** le trajet de faisceau partiel de détection commence à l'extrémité de l'objectif, tournée vers l'échantillon, et/ou dans lequel les propriétés de reproduction du trajet de faisceau d'éclairage sont meilleures que les propriétés de reproduction du trajet de faisceau partiel de détection.

3. Système d'objectif de microscope selon la revendication 1 ou 2, **caractérisé en ce que** le trajet de faisceau d'éclairage présente une première valeur de photoconductivité et le trajet de faisceau de détection présente une deuxième valeur de photoconductivité qui est supérieure à la première valeur de photoconductivité.

4. Système d'objectif de microscope selon l'une quelconque des revendications précédentes, **caractérisé en ce que** la zone intérieure est réalisée en forme de cercle et la zone extérieure est réalisée en forme d'anneau de cercle et/ou dans lequel la zone extérieure (10) est réalisée comme une zone réfractive à pouvoir réfringent positif.

5. Système d'objectif de microscope selon l'une quelconque des revendications précédentes, **caractérisé en ce que** la zone extérieure (10) est réalisée comme une lentille graduée, en particulier comme une lentille de Fresnel, ou dans lequel la zone extérieure est réalisée comme une zone diffractive.

6. Système d'objectif de microscope selon l'une quelconque des revendications 1 à 4, **caractérisé en ce que** l'élément optique (8) est disposé dans l'objectif (3) de telle sorte qu'il est le dernier élément de l'objectif (3) avant l'échantillon (7) à examiner.

7. Système d'objectif de microscope selon l'une quelconque des revendications précédentes, **caractérisé en ce que** le trajet de faisceau partiel de détection et le trajet de faisceau d'éclairage sont disposés de façon coaxiale l'un par rapport à l'autre et/ou dans lequel le trajet de faisceau partiel de détection s'étend le long du trajet de faisceau d'éclairage et passe alors progressivement au trajet de faisceau d'éclairage.

8. Système d'objectif de microscope selon l'une quelconque des revendications précédentes, **caractérisé en ce qu'**en outre, un détecteur (6) et un séparateur de faisceau (4) disposé entre le détecteur (6) et l'objectif (3) sont fournis, dans lequel le séparateur de faisceau (4) dirige le rayonnement à détecter sur le détecteur (6).

9. Système d'objectif de microscope selon l'une quelconque des revendications précédentes, **caractérisé en ce que** l'objectif (3) présente un élément frontal optique (8), plusieurs éléments optiques espacés de l'élément frontal et les uns des autres, ainsi qu'un dispositif de réglage (11, 12) au moyen duquel au moins l'un des éléments optiques peut être déplacé le long de l'axe optique (OA) de telle sorte qu'au moins un espacement entre deux éléments voisins est variable, dans lequel, en particulier au moyen du dispositif de réglage (11, 12), ledit au moins un espacement est modifié pour déplacer la position focale de l'objectif (3) par rapport à l'élément frontal en direction de l'axe optique (OA).

10. Système d'objectif de microscope selon la revendication 9, **caractérisé en ce qu'**au moyen du dispositif de réglage, ledit au moins un espacement est modifié en fonction de la température de l'objectif afin de compenser une erreur de reproduction de l'objectif, due à la température, et/ou dans lequel, au moyen du dispositif de réglage, deux espacements sont modifiés indépendamment l'un de l'autre.

11. Utilisation d'un système d'objectif de microscope selon l'une quelconque des revendications précédentes avec un microscope, en particulier un microscope à fluorescence ou un microscope à 2 photons.

12. Procédé de microscopie, dans lequel un échantillon à examiner est exposé à un rayonnement d'éclairage d'une source, par l'intermédiaire d'un objectif, et un rayonnement à détecter, émanant de l'échantillon, est amené par l'intermédiaire de l'objectif à un détecteur, dans lequel on utilise une valeur de photoconductivité pour l'exposition qui est inférieure à celle pour la détection,
une ouverture centrale est attribuée à la valeur de photoconductivité lors de l'exposition, et l'ouverture centrale et une ouverture annulaire entourant l'ouverture centrale sont attribuées à la valeur de photoconductivité lors de la détection,

**caractérisé en ce qu'**un système d'objectif de microscope selon la revendication 1 est utilisé.

13. Procédé selon la revendication 12, dans lequel l'échantillon est exposé à un rayonnement d'éclairage pulsé et/ou dans lequel une excitation par 2 photons est détectée.

WB

OA

α1

α2

7

D

3

1

4

2

5

6

Fig. 1

8

9

10

Fig. 2

Fig. 3

Fig. 4

EP 1 746 449 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6122046 A, Almogy